# EUROPEAN PATENT SPECIFICATION

(11) **EP 0 754 280 B1**
(45) Date of publication and mention of the grant of the patent: **31.07.2002**
(21) Application number: 95912875.2
(22) Date of filing: 14.03.1995
(51) Int. Cl.: F16L 17/03, F16L 27/12

(54) **FLEXIBLE CONNECTOR**
BIEGSAME VERBINDUNG
RACCORD FLEXIBLE

(30) Priority: 15.03.1994 US 210541
(43) Date of publication of application: 22.01.1997
(73) Proprietor: AEROQUIP CORPORATION, Maumee, Ohio 43537-0050 (US)
(72) Inventor: ALLREAD, Alan R., Armada, MI 48005 (US); THOMPSON, William E., Lake Orion, MI 48360 (US)
(74) Representative: Gleiss & Grosse
(86) International application number: US9503049
(87) International publication number: WO9525240

(56) References cited:
- WO-A-93/20376
- US-A- 2 229 587
- US-A- 2 398 399
- US-A- 2 839 089
- US-A- 4 838 582
- US-A- 5 314 214

## Description

### TECHNICAL FIELD

The present invention relates to the field of connectors for joining together lengths of tubing. More specifically, the present invention relates to a flexible connector which is particularly adaptable to use for connecting together rigid lengths of tubing for carrying low pressure liquids such as fuel.

### BACKGROUND OF THE INVENTION

Connectors for joining together lengths of tubing are known in the art. Examples of prior connectors are disclosed in U.S. Patents Nos. 2,154,077; 2,836,436; 3,680,895; 4,068,868; 4,480,857; 4,606,559; 4,079,998; 4,906,027; 5,048,873; 5,127,681; 5,180,194; and 5,182,922.

Lengths of rigid tubing such as copper, steel or aluminum are utilized in many applications including automobile applications, aircraft applications and other non transportation applications.

A flexible connector according to the preamble of claim 1 is known from US 2,229,587 A.

The present invention provides a flexible connector which is particularly adaptable for use for connecting rigid tubing used in low pressure applications, such as the transporting of liquid fuels.

Accordingly, it is the primary object of the present invention to provide an improved fluid connector for connecting together lengths of rigid tubing.

### SUMMARY OF THE INVENTION

The present invention is directed to a flexible connector, for sealingly joining together opposed ends of adjoining lengths of rigid tubing, with the features of claim 1.

In one embodiment, a wedge member is provided for retarding relative rotation of the connected housing and insertion member.

### BRIEF DESCRIPTION OF THE DRAWINGS

Fig. 1 is an elevational view of a flexible connector, according to the present invention;
Fig. 2 is an exploded sectional view showing the components of the flexible connector;
Fig. 3 is a sectional view showing the flexible connector of Fig. 2 in an assembled position; and
Fig. 4 is a sectional view, similar to Fig. 3, of another embodiment of the present invention.

### DETAILED DESCRIPTION OF THE PREFERRED EMBODIMENTS

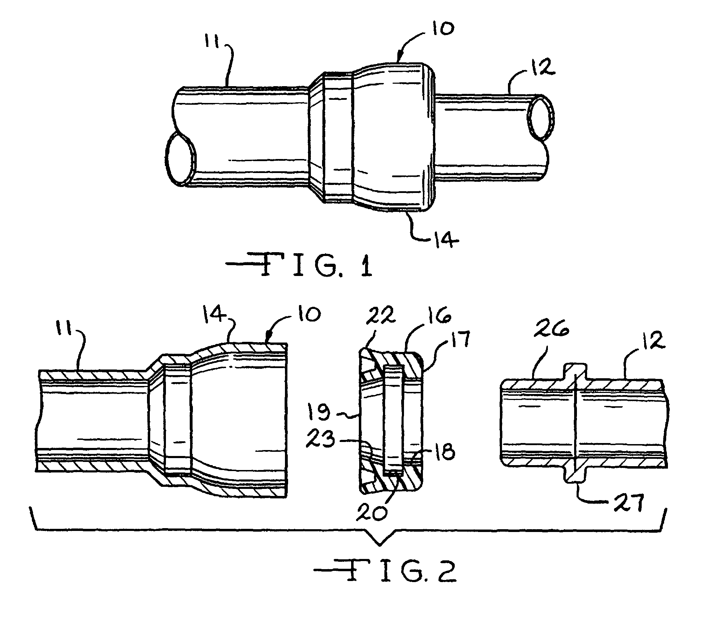

A flexible connector, according to the present invention, is generally indicated in Fig. 1 by the reference number 10. The flexible connector 10 is utilized to connect together adjoining rigid lengths of tubing 11 and 12. The lengths of tubing 11 and 12 may be constructed of various types of rigid materials including either plastic or metals. When the lengths of tubing 11 and 12 are constructed of metal, the most typical metals would be aluminum, copper or steel.

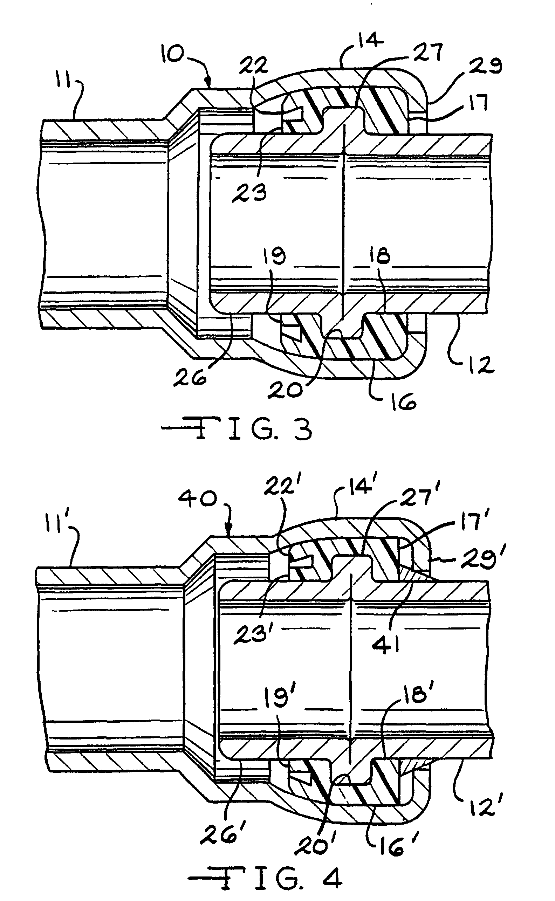

Referring to Fig. 2, the flexible connector 10 includes a bell-shaped housing 14 for connection to the opposed end of the length of rigid tubing 11. In the present embodiment, the bell-shaped housing 14 is integrally formed on the end of the length of tubing 11. In other situations, the bell-shaped housing 14 is connected by welding, adhesion or other fastening means to the length of rigid tubing 11. A generally cylindrically shaped elastomeric seal member 16 has a first end 17 which defines a receiving opening 18. The elastomeric seal member 16 has a second end 19. The seal member 16 defines an Internal circular groove 20 between the first end 17 and the second end 19. The second end 19 of the elastomeric seal member 16 includes a pair of diverging sealing flanges 22 and 23. The sealing flanges 22 and 23 have a generally conical configuration. The seal member 16 is constructed of an elastomeric material. The materials can be suitable plastics or rubber-like materials such as SBR synthetic rubber, natural rubber, neoprene or a urethane material.

Referring to Fig. 2, the flexible connector 10 includes a longitudinally extending insertion member 26. Again, in the present embodiment the insertion member 26 is integrally formed on the other length of rigid tubing 12. However, the insertion member 26 may be welded or otherwise attached to the length of tubing 12.

The insertion member 26 includes a raised portion 27 which has a generally cylindrical configuration. In the present embodiment, the raised portion 27 is formed by bumping the length of tubing 12. However, the raised portion 27 may be formed by several methods including attaching an outer ring to the length of tubing 12 to form the raised portion 27.

Referring to Fig. 3, when the insertion member 26 is positioned within the bell-shaped housing 14, the raised portion 27 of the insertion member 26 is received by the groove 20 defined on the interior of the elastomeric seal member 16. The seal member 16 is compressed between the housing 14 and the insertion member 26. In the assembled position, shown in Fig. 3, the pair of diverging sealing flanges 22 and 23 are also compressed toward one another and are positioned between the bell-shaped housing 14 and the insertion member 26. The bell-shaped housing 14 includes an inwardly directed end member 29 which abuts and restrains the first end 17 of the elastomeric seal member 16.

In the assembled, compressed position shown in Fig. 3, the flexible connector 10 forms a connector for the rigid lengths of tubing 11 and 12 which is particularly capable of transporting low pressure fluids, such as liquid gas having pressures of less than 250 psi (1 psi = 6.89476x10³ Pa).

The flexible connector 10, according to the present invention, is particularly useful in that it maintains a limited degree of flexibility relative to angular displacement along the longitudinal axes of the lengths of rigid tubing 11 and 12.

Referring to Fig. 4, another embodiment of a flexible connector, according to the present invention, is generally indicated by the reference number 40. The flexible connector 40 not only includes the ability to flex along the longitudinal axes of the tube components, but also retards relative rotation between the bell-shaped housing 14' and the insertion member 26'. A circular wedge member 41 surrounds the insertion member 26 and is positioned between the insertion member 26 and the inwardly directed end member 29' of the bell-shaped housing 14'. In the present embodiment, the circular wedge member 41 abuts the first end 17' of the elastomeric seal member 16'. The wedge member 41 may be constructed of different materials. In the present embodiment, the wedge member 41 is constructed of a high durometer elastomeric material.

As noted above, the compression of the wedge member 41 between the bell-shaped housing 14' and the insertion member 26' retards relative rotation between those components.

One advantage of both of the above described embodiments of the present invention is that the tubing 11 and the tubing 12 after connection can move both angularly and also axially relative to their longitudinal centerlines. This is unusual in a non ball-joint connection. While this arcing feature occurs primarily at lower pressures under 50 psi, even at higher pressure where the Fig. 3 wedge embodiment is used there still is some axial flexibility. This arcing feature is often desirable in the field.

Another advantage of the flexible connector, according to the present invention, is that the tubing 11 and tubing 12 can rotate around their longitudinal axes after connection. Such rotation is easier at low pressure, but is still possible to a limited degree even at high pressures.

Many revisions may be made to the above described best modes without departing from the scope of the invention as defined by the following claims.

## Claims

1. A flexible connector (10;40) for sealingly joining together opposing ends of adjoining lengths of rigid tubing (11,12;11',12') comprising,
a generally bell-shaped housing (14;14') for connection to one of such opposed ends of such adjoining lengths of rigid tubing (12;12'),
a generally cylindrically shaped elastomeric seal member (16;16') having a first end (17;17') defining a receiving opening and a second end (19;19'), said elastomeric seal member (16;16') defining a circular groove (20;20') between said first and second ends (17,19;17',19'), said bell-shaped housing (14;14') receiving said elastomeric seal member (16;16') and
a longitudinally extending generally cylindrical insertion member (26;26') for connection to the other one of such opposed ends of such adjoining lengths of said tubing (11,12;11',12'), said insertion member (26;26') having a raised portion (27;27') received by said circular groove (20;20') of said elastomeric seal member (16;16'), said cylindrical shaped elastomeric seal member (16;16') being compressed between said bell-shaped housing (14;14') and said cylindrical insertion member (26;26'),
said second end (19;19') of said elastomeric seal member (16;16') including a pair of diverging sealing flanges (22,23;22',23'), wherein upon assembly said flanges (22,23;22',23') are positioned between said bell-shaped housing (14;14') and said cylindrical insertion member (26;26') and are compressed toward one another,
whereby said lengths of rigid tubing, i.e. said generally bell-shaped housing (14;14') and said generally cylindrical insertion member (26;26'), (11,12;11',12') can be moved angularly after connection,
**characterized in that**,
upon assembly and in an angular position of the lengths of rigid tubing (11,12;11',12'), i.e. in an angular position of the generally bell-shaped housing (14;14') and of the generally cylindrical insertion member (26;26'), a circular part of the pair of diverging sealing flanges (22,23;22',23') is pressed against the housing (14;14') and/or against the insertion member (26;26') by means of the raised portion (27;27'), and **in that** the raised portion (27;27') and the groove (20;20') essentially have a rectangular cross-section, respectively, and **in that** upon assembly the raised portion (27;27') extends radially up to a circular plane comprising at least partly the inner surface of the outer sealing flange (22;22'), and **in that** upon assembly the distance of the raised portion (27;27') from a circular gap between the sealing flanges (22,23;22'23') corresponds essentially to the thickness of one sealing flange (22;22').

2. A flexible connector, according to claim 1, including means for retarding rotation of said cylindrical insertion member (26;26') relative to said bell-shaped housing (14;14').

3. A flexible connector, according to claim 2, wherein said retarding means comprises at least one circular continuous wedge member (41) mounted between said bell-shaped housing (14;14') and said cylindrical insertion member (26;26').

4. A flexible connector, according to claim 3, wherein said bell-shaped housing. (14;14') includes an inwardly directed end member (29;29'), said circular continuous wedge member (41) being positioned between said end member (29;29') and said cylindrical insertion member (26;26'), said wedge member (41) abutting said inwardly directed end member (29;29') of said bell-shaped housing (14;14').

5. A flexible connector, according to claim 1, wherein said lengths of rigid tubing (11,12;11'12'), i.e. said generally bell-shaped housing (14;14') and said generally cylindrical insertion member (26;26'), can be rotated around their longitudinal axes after connection.

6. A flexible connector, according to claim 5, including means for retarding rotation of said cylindrical insertion member (26;26') relative to said bell-shaped housing (14;14').

7. A flexible connector, according to claim 6, wherein said retarding means comprises a continuous wedge member (41) mounted between said bell-shaped housing (14;14') and said cylindrical insertion member (26;26').

## Patentansprüche

1. Biegsame Verbindung (10; 40) zum dichten Verbinden gegenüberliegender Enden von aneinandergrenzenden Längen bzw. Abschnitten starrer Rohre (11, 12; 11', 12') mit:
einem im allgemeinen glockenförmigen Gehäuse (14; 14') zum Verbinden mit einem solcher gegenüberliegender Enden solcher aneinanderstoßender Längen bzw. Abschnitte starrer Rohre (12; 12'),
einem im allgemeinen zylinderförmigen, elastischen Verschlusselement (16; 16') mit einem ersten Ende (17; 17'), das eine Aufnahmeöffnung bildet, und einem zweiten Ende (19; 19'), wobei das elastische Verschlusselement (16; 16') zwischen den ersten und zweiten Enden (17, 19; 17', 19') eine kreisförmige Nut (20; 20') bildet, wobei das glockenförmige Gehäuse (14; 14') das elastische Verschlusselement (16; 16') aufnimmt und
einem in Längsrichtung verlaufenden, im allgemeinen zylindrischen Zwischenelement (26; 26') zum Verbinden mit den anderen solcher gegenüberliegender Enden solcher aneinandergrenzender Längen bzw. Abschnitte der Rohre (11, 12; 11', 12'), wobei das Zwischenelement (26; 26') einen vorstehenden Abschnitt (27; 27') von der kreisförmigen Nut (20; 20') des elastischen Verschlusselements (16; 16') aufgenommen hat, wobei das zylindrisch geformte elastische Verschlusselement (16; 16') zwischen dem glockenförmigen Gehäuse (14; 14') und dem zylindrischen Zwischenelement (26; 26') eingepresst ist,
wobei das zweite Ende (19; 19') des elastischen Verschlusselements (16; 16') ein Paar divergierender Verschlussflansche (22, 23; 22',23') aufweist, wobei nach einem Zusammenbau die Flansche (22, 23; 22',23') zwischen dem glockenförmigen Gehäuse (14; 14') und dem zylindrischen Zwischenelement (26; 26') angeordnet sind und gegeneinander gepresst werden,
wodurch die Längen bzw. Abschnitte der starren Rohre (11, 12; 11', 12'), d. h. das im allgemeinen glockenförmige Gehäuse (14; 14') und das im allgemeinen zylindrische Zwischenelement (26; 26'), nach der Verbindung schräg bewegt werden können,
**dadurch gekennzeichnet, dass**
nach einem Zusammenbau und in einer schrägen Position der Längen bzw. Abschnitte der starren Rohre (11, 12; 11', 12'), d. h. in einer schrägen Position des im allgemeinen glockenförmigen Gehäuses (14; 14') und des im allgemeinen zylindrischen Zwischenelements (26; 26'), ein kreisförmiger Teil des Paars divergierender Verschlussflansche (22, 23; 22', 23') mit Hilfe des vorstehenden Abschnitts (27; 27') gegen das Gehäuse (14; 14') und/oder gegen das Zwischenelement (26; 26') gepresst wird, und dass der vorstehende Abschnitt (27; 27') und die Nut (20; 20') im wesentlichen jeweils einen rechteckigen Querschnitt besitzen, und dass nach einem Zusammenbau der vorstehende Abschnitt (27; 27') radial bis zu einer kreisförmigen Ebene ragt, welche zumindest teilweise die Innenfläche des äußeren Verschlussflansches (22; 22') umfasst, und dass nach einem Zusammenbau der Abstand des vorstehenden Abschnitts (27; 27') von einer kreisförmigen Lücke zwischen den Verschlussflanschen (22, 23; 22', 23') im wesentlichen der Dicke von einem Verschlussflansch (22; 22') entspricht.

2. Biegsame Verbindung nach Anspruch 1 mit einer Einrichtung zum Hemmen einer Drehung des zylindrischen Zwischenelements (26; 26') relativ zu dem glockenförmigen Gehäuse (14; 14').

3. Biegsame Verbindung nach Anspruch 2, bei welcher die Hemmeinrichtung zumindest ein kreisförmiges, ununterbrochenes Keilelement (41) aufweist, das zwischen dem glockenförmigen Gehäuse (14; 14') und dem zylindrischen Zwischenelement (26; 26') eingesetzt ist.

4. Biegsame Verbindung nach Anspruch 3, bei welcher das glockenförmige Gehäuse (14; 14') ein nach innen gerichtetes Endelement (29; 29') aufweist, das kreisförmige, ununterbrochene Keilelement (41) zwischen dem Endelement (29; 29') und dem zylindrischen Zwischenelement (26; 26') angeordnet ist und das Keilelement (41) an das nach innen gerichtete Endelement (29; 29') des glockenförmigen Gehäuses (14; 14') angrenzt.

5. Biegsame Verbindung nach Anspruch 1, bei welcher die Längen bzw. Abschnitte starrer Rohre (11, 12; 11', 12'), d. h. das im allgemeinen glockenförmige Gehäuse (14; 14') und das im allgemeinen zylindrische Zwischenelement (26; 26'), nach einer Verbindung um ihre Längsachsen gedreht werden können.

6. Biegsame Verbindung nach Anspruch 5, mit einer Einrichtung zum Hemmen einer Drehung des zylindrischen Zwischenelements (26; 26') relativ zu dem glockenförmigen Gehäuse (14; 14').

7. Biegsame Verbindung nach Anspruch 6, bei welcher die Hemmeinrichtung ein ununterbrochenes Keilelement (41) aufweist, welches zwischen das glockenförmige Gehäuse (14; 14') und das zylindrische Zwischenelement (26; 26') eingesetzt ist.

## Revendications

1. Connecteur flexible (10 ; 40) destiné à raccorder ensemble de manière étanche des extrémités opposées de longueurs adjacentes de tuyauterie rigide (11, 12 ; 11', 12'), comprenant
un logement en forme générale de cloche (14 ; 14') pour raccordement à une parmi de telles extrémités opposées de telles longueurs adjacentes de tuyauterie rigide (12 ; 12'),
un élément d'étanchéité en élastomère de forme générale cylindrique (16 ; 16') comportant une première extrémité (17 ; 17') définissant une ouverture de réception et une deuxième extrémité (19 ; 19'), ledit élément d'étanchéité en élastomère (16 ; 16') définissant une gorge circulaire (20 ; 20') entre lesdites première et deuxième extrémités (17, 19 ; 17' 19'), ledit logement en forme de cloche (14 ; 14') recevant ledit élément d'étanchéité en élastomère (16 ; 16') et
un élément d'insertion généralement cylindrique se prolongeant longitudinalement (26 ; 26') pour raccordement à l'autre des telles extrémités opposées des telles longueurs adjacentes de ladite tuyauterie(11, 12 ; 11', 12'), ledit élément d'insertion (26 ; 26') comportant une partie rehaussée (27 ; 27') reçue par ladite gorge circulaire (20 ; 20') dudit élément d'étanchéité en élastomère (16 ; 16'), ledit élément d'étanchéité en élastomère cylindrique (16 ; 16') étant comprimé entre ledit logement en forme de cloche (14 ; 14') et ledit élément d'insertion généralement cylindrique (26 ; 26'),
ladite deuxième extrémité (19 ; 19') dudit élément d'étanchéité en élastomère (16 ; 16') comprenant une paire de collerettes d'étanchéité divergeantes (22, 23 ; 22', 23'), dans laquelle lors de l'assemblage lesdites collerettes (22, 23 ; 22', 23') sont positionnées entre ledit logement en forme de cloche (14 ; 14') et ledit élément d'insertion cylindrique (26 ; 26') et sont comprimées l'une vers l'autre,
d'où il résulte que lesdites longueurs de tuyauterie rigide (11, 12 ; 11', 12'), c'est-à-dire ledit logement en forme générale de cloche (14 ; 14') et ledit élément d'insertion généralement cylindrique (26 ; 26') peuvent être déplacées angulairement après raccordement,
**caractérisé en ce que**
lors de l'assemblage et dans une position angulaire des longueurs de tuyauterie rigide (11, 12 ; 11', 12'), c'est-à-dire dans une position angulaire du logement en forme générale de cloche (14 ; 14') et de l'élément d'insertion généralement cylindrique (26 ; 26'), une partie circulaire de la paire de collerettes d'étanchéité divergeantes (22, 23 ; 22', 23') est pressée contre le logement (14 ; 14') et/ou contre l'élément d'insertion (26 ; 26') au moyen de la partie rehaussée (27 ; 27') et **en ce que** la partie rehaussée (27 ; 27') et la gorge (20 ; 20') présentent une section transversale essentiellement rectangulaire, respectivement, et **en ce que** lors de l'assemblage la partie rehaussée (27 ; 27') se prolonge radialement jusqu'à un plan circulaire contenant au moins partiellement la surface interne de la collerette d'étanchéité externe (22 ; 22') et **en ce que** lors de l'assemblage la distance de la partie rehaussée (27 ; 27') à partir d'un espace circulaire entre les collerettes d'étanchéité (22, 23 ; 22', 23') correspond sensiblement à l'épaisseur d'une collerette d'étanchéité (22 ; 22').

2. Connecteur flexible selon la revendication 1, comprenant un moyen destiné à retarder la rotation dudit élément d'insertion cylindrique (26 ; 26') par rapport audit logement en forme de cloche (14 ; 14').

3. Connecteur flexible selon la revendication 2, dans lequel ledit moyen de retardement comprend au moins un élément en coin circulaire continu (41) monté entre ledit logement en forme de cloche (14 ; 14') et ledit élément d'insertion cylindrique (26 ; 26').

4. Connecteur flexible selon la revendication 3, dans lequel ledit élément en forme de cloche (14 ; 14') comprend un élément d'extrémité dirigé vers l'intérieur (29 ; 29'), ledit élément en coin circulaire continu (41) étant positionné entre ledit élément d'extrémité (29 ; 29') et ledit élément d'insertion cylindrique (26 ; 26') ledit élément en coin (41) butant contre ledit élément d'extrémité dirigé vers l'intérieur (29 ; 29') dudit logement en forme de cloche (14 ; 14').

5. Connecteur flexible selon la revendication 1, dans lequel lesdites longueurs de tuyauterie rigide (11, 12 ; 11', 12'), c'est-à-dire ledit logement en forme générale de cloche (14 ; 14') et ledit élément d'insertion généralement cylindrique (26 ; 26') peuvent tourner autour de leurs axes longitudinaux après raccordement.

6. Connecteur flexible selon la revendication 5, comprenant un moyen destiné à retarder la rotation dudit élément d'insertion cylindrique (26 ; 26') par rapport audit logement en forme de cloche (14 ; 14').

7. Connecteur flexible selon la revendication 6, dans lequel ledit moyen de retardement comprend un élément en coin circulaire continu (41) monté entre ledit logement en forme de cloche (14 ; 14') et ledit élément d'insertion cylindrique (26 ; 26').
